# EUROPÄISCHE PATENTANMELDUNG

(11) **EP 0 875 820 A1**
(43) Veröffentlichungstag der Anmeldung: **04.11.1998**
(21) Anmeldenummer: 98106050.2
(22) Anmeldetag: 02.04.1998
(51) Int. Cl.: G06F 3/023, G06F 3/033

(54) **Verfahren und System zur drahtlosen Signalübertragung zwischen einem Personal-Computer und einer Tastatur oder einer Maus**

(30) Priorität: 17.04.1997 DE 19716101
(71) Anmelder: Siemens Nixdorf Informationssysteme AG, 33106 Paderborn (DE)
(72) Erfinder: Demharter, Nikolaus, 86507 Oberrottmarshausen (DE); Breibisch, Herbert, 86179 Augsburg (DE)
(74) Vertreter: Epping, Wilhelm, Dr.-Ing.

(57) **Zusammenfassung**

Die Übertragung erfolgt in vier bidirektionalen Signalkanälen, nämlich einen für Tastatur-Daten (KB_DAT), für Tastatur-Takt (KB_CLK), für Maus-Daten (M_DAT) sowie für Maus-Takt (M_CLK) und einer PS/2-Schnittstelle o. ä., wobei auf jeder der beiden Seiten der Übertragungsstrecke Signale nach dem TDMA-Verfahren serialisiert, einem HF- oder IR-Träger aufmoduliert und ausgestrahlt werden. Auf beiden Seiten der Übertragungsstrecke wird der empfangene Datenstrom demoduliert, demultiplexiert und damit entserialisiert und in Signale auf die Kanäle der Tastatur und der Maus aufgeteilt.

## Beschreibung

Die Erfindung betrifft ein Verfahren gemäß dem Oberbegriff des Patentanspruchs 1 und betrifft auch ein System zur Durchführung des Verfahrens.

Es ist bereits eine Einrichtung zur drahtlosen Anbindung zwischen einem Personal-Computer einerseits und von Eingabegeräten mit einer Tastatur oder Maus andererseits bekannt (Firma Cherry). Dabei wird eine unidirektionale Anbindung realisiert und zwar mit einem mechanischen Kanalwahlschalter am Personal-Computer und an der Tastatur für die Codierung. Als Schnittstelle ist hierbei die sogenannte AT-Bus-Keyboard-Schnittstelle gewählt.

Für einen drahtlosen Anschluß von Tastatur und Maus an einen Personal-Computer eignet sich jedoch die am Personal-Computer standardisierte AT-Bus-Schnittstelle nicht direkt, da zumindest vier bidirektionale Signale übertragen werden müssen.

Der Erfindung liegt die Aufgabe zugrunde, zur drahtlosen Anbindung einer Tastatur oder einer Maus an einen Personal-Computer ein geeignetes, technisch wenig aufwendiges Verfahren und ein geeignetes System zur Durchführung eines solchen Verfahrens zu schaffen.

Gemäß der Erfindung wird diese Aufgabe bei einem gattungsgemäßen Verfahren durch die im kennzeichnenden Teil des Patentanspruchs 1 angegebenen Merkmale gelost. Entsprechend dem Verfahren nach der Erfindung werden zum drahtlosen Anschließen einer Tastatur oder einer Maus an einen Personal-Computer oder an ein Notebook vier bidirektionale Signale auf ein gerichtetes serielles Signal durch Anwendung des TDMA(Time Division Multiple Access = Zeitmultiplex)-Verfahrens umgesetzt. Das gerichtete serielle Datenstrom-Signal ist ein Zeitmultiplexsignal.

Zweckmäßige Weiterbildungen des Verfahrens nach der Erfindung sind in den Patentansprüchen 2 bis 5 angegeben. Eine dieser Weiterbildungen besteht im Ergebnis darin, daß unter Einbeziehung des TDMA-Verfahrens zusätzlich noch Steuersignale ebenfalls auf das gerichtete serielle Signal umgesetzt werden können. Das gesamte Zeitmultiplexsignal enthält dann nicht nur ein Tastatur-Datensignal, ein Tastatur-Taktsignal, ein Maus-Datensignal sowie ein Maus-Taktsignal, sondern noch zusätzliche Signale, z.B. ein Adressierungssignal, ein Signal zum Austausch von Status und Kommandos, ein Paritätssignal zur Übertragungssicherung und eventuell noch ein frei verfügbares Signal.

Ein die gestellte Aufgabe lösendes System ist im Patentanspruch 6 angegeben.

Vorteilhafte und zweckmäßige Ausgestaltungen und Weiterbildungen dieses Systems sowie eine Einrichtung zur Verwendung in diesem System sind in den weiteren Patentansprüchen angeführt.

Die Erfindung wird im folgenden im Zusammenhang mit einem vorteilhaften Ausführungsbeispiel anhand von drei Figuren erläutert. Es zeigen:
- FIG. 1: das Blockschaltbild eines Systems zur Durchführung des Verfahrens nach der Erfindung,
- FIG. 2: das Blockschaltbild einer besonderen Einrichtung innerhalb des in FIG. 1 dargestellten Systems, und
- FIG. 3: das Beispiel einer TDMA-Umsetzung von drei einzelnen Eingangssignalen auf ein Multiplex-Ausgangssignal.

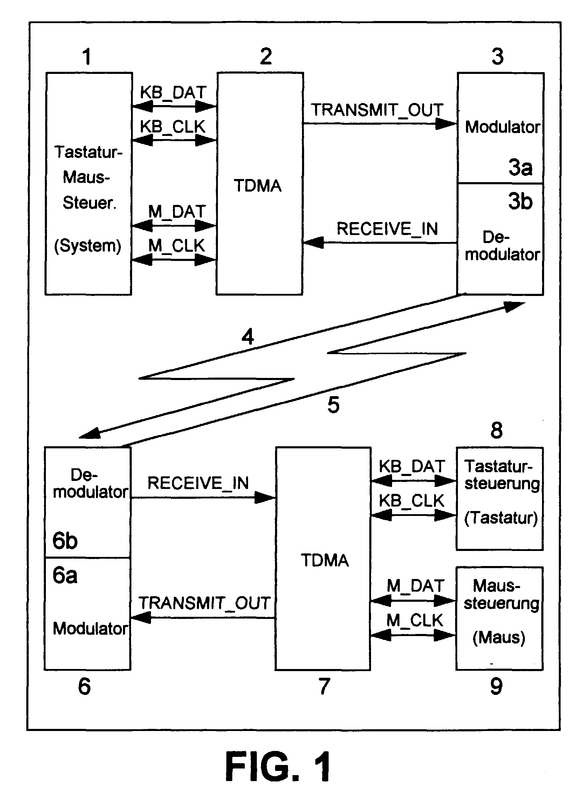

In FIG. 1 ist in einem Blockschaltbild eine Übertragungsstrecke mit einem System zum drahtlosen Anschließen einer Tastatur und einer Maus an einen Personal-Computer dargestellt. Es kann sich beim Personal-Computer auch um eine tragbare Ausführungsform handeln, also um ein sogenanntes Notebook. Die drei in der oberen Hälfte der FIG. 1 dargestellten Komponenten sind im Personal-Computer enthalten, wogegen die in der unteren Hälfte dieser Figur gezeigten Komponenten zum räumlich abgesetzten Tastatur/Maus-Bereich gehören. Im Personal-Computer ist eine Tastatur- bzw. Maussteuerung 1 vorhanden, an der vier bidirektionale Signale einer PS/2-Schnittstelle oder einer ähnlichen Schnittstelle vorliegen. Bei den vier bidirektionalen Signalen handelt es sich um ein Tastatur-Datensignal KB_DAT, ein Tastatur-Taktsignal KB_CLK, ein Maus-Datensignal M_DAT sowie ein Maus-Taktsignal M_CLK.

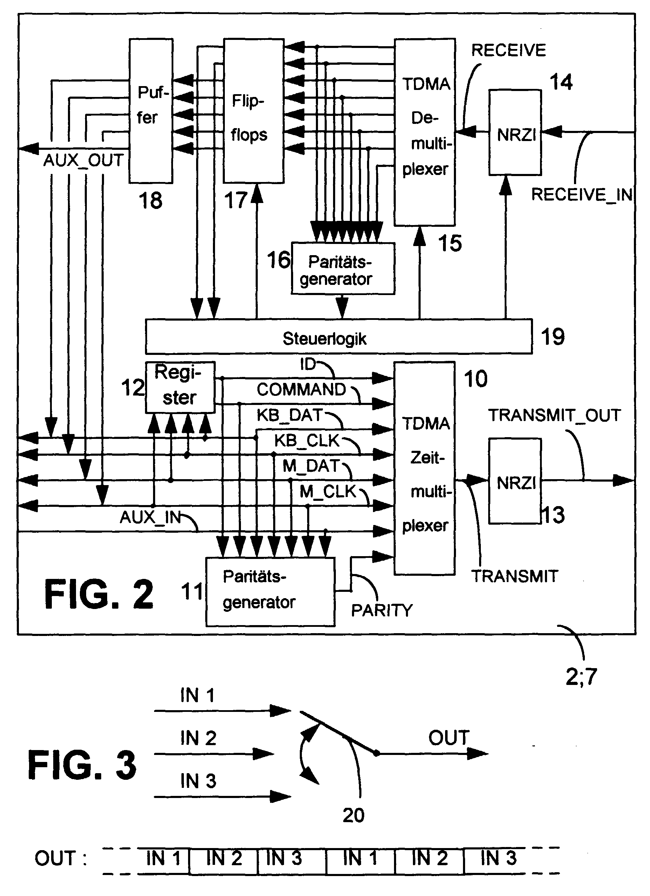

Der Verbindungsweg dieser vier bidirektionalen Signale führt in eine speziell ausgebildete TDMA-Schaltung 2, die einen Zeitmultiplexer sowie einen entsprechenden Demultiplexer enthält und im einzelnen in FIG. 2 dargestellt ist.

Ein der TDMA-Schaltung 2 entnommenes serielles Multiplexsignal TRANSMIT_OUT wird dem Modulator 3a eines Modulator/Demodulator-Blocks 3 zugeführt, in dem eine Modulation eines Hochfrequenzträgers oder aber eines Infrarotträgers stattfindet. Das mit dem Zeitmultiplexsignal modulierte Trägersignal wird dann von einem nicht dargestellten Sender funkmäßig in den Raum abgestrahlt, was durch den Pfeil 4 symbolisiert sein soll.

Der TDMA-Schaltung 2 wird in der entgegengesetzten Richtung vom Demodulator 3b des Modulator/Demodulator-Blocks 3 ein empfangenes und dann demoduliertes Zeitmultiplexsignal RECEIVE_IN zum Demultiplexen zugeführt. Das demodulierte Signal wurde vor dem Demodulationsprozeß in einer auf einem Hochfrequenzträger oder Infrarotträger aufmodulierten Form mittels eines nicht in der FIG.1 dargestellten Empfängers funkmäßig empfangen, was durch den Pfeil 5 symbolisiert sein soll. Vergleichbare Komponenten sind in dem in FIG. 1 in der unteren Zeichnungshälfte dargestellten Tastatur/Maus-Bereich enthalten.

Die über den mit dem Pfeil 4 symbolisierten Funkweg ankommenden und mit einem in FIG. 1 nicht dargestellten Empfänger empfangenen, einem Hochfrequenz- bzw. Infrarotträger aufmodulierten Signale werden im Demodulator 6b eines Modulator/Demodulator-Blocks 6 demoduliert und als demoduliertes Zeitmultiplexsignal RECEIVE_IN einer speziell ausgebildeten TDMA-Schaltung 7 zugeführt. Die TDMA-Schaltung 7 entspricht in ihrem Aufbau der in FIG. 2 im einzelnen dargestellten TDMA-Schaltung 2. In der TDMA-Schaltung 7 erfolgt ein Demultiplexen des empfangenen Zeitmultiplex-Signals RECEIVE_IN.

Im Tastatur/Maus-Bereich sind eine Tastatursteuerung 8, an der die beiden bereits erwähnten bidirektionalen Signale KB_DAT und KB_CLK der PS/2-Schnittstelle oder einer ähnliche Schnittstelle vorliegen, und eine Maussteuerung 9 vorgesehen, an der die beiden ebenfalls bereits erwähnten bidirektionalen Signale M_DAT und M_CLK der PS/2-Schnittstelle oder einer ähnlichen Schnittstelle vorliegen. Der Verbindungsweg dieser vier bidirektionalen Signale führt in die speziell ausgebildete TDMA-Schaltung 7, die einen Zeitmultiplexer sowie einen entsprechenden Demultiplexer enthält.

Das durch das Demultiplexen in der TDMA-Schaltung 7 in die vier parallelen Kanäle KB_DAT, KB_CLK, M_DAT und M_CLK aufgeteilte empfangene Signal RECEIVE_IN gelangt in der einen Richtung in die Tastatursteuerung 8 bzw. in die Maussteuerung 9. In der anderen Richtung werden die Signale in den vier Kanälen KB_DAT, KB_CLK, M_DAT und M_CLK von der Tastatursteuerung 8 und der Maussteuerung 9 der TDMA-Schaltung 7 zugeführt, der dann das auszusendende serielle Multiplexsignal TRANSMIT_OUT entnommen wird und zum Modulator 6a des Modulator/Demodulator-Blocks 6 weitergeleitet wird, in dem eine Modulation des Hochfrequenzträgers bzw. des Infrarotträgers stattfindet. Das mit dem Zeitmultiplexsignal modulierte Trägersignal wird dann von einem in der FIG. 1 nicht dargestellten Sender über Funk in den Raum abgestrahlt, was durch den Pfeil 5 angedeutet ist.

Im folgenden wird anhand der FIG. 2 die in FIG. 1 nur als Kästchen dargestellte, speziell ausgebildete TDMA-Schaltung 2 erläutert. Die TDMA-Schaltung 7 im Tastatur/Maus-Bereich stimmt mit der TDMA-Schaltung 2 im Personal-Computer hinsichtlich ihres Aufbaus und ihrer Wirkungsweise völlig überein. Die Signale KB_DAT, KB_CLK, M_DAT und M_CLK sind die vier bidirektionalen Signale der PS/2-Schnittstelle oder einer ähnlichen Schnittstelle. Diese Signale sowie noch zusätzliche Signale werden entsprechend dem TDMA-Verfahren in einem TDMA-Zeitmultiplexer 10 serialisiert.

Die zusätzlichen Signale sind ein Signal ID zur Adressierung, ein Signal COMMAND zum Austausch von Status und Kommandos, ein frei verfügbares Signal AUX_IN und ein aus einem Paritätsgenerator 11 entnommenes Paritätssignal PARITY zur Übertragungssicherung. Die Signale ID und COMMAND werden von einem Register 12 zugeführt. Das serielle Zeitmultiplexsignal TRANSMIT vom Ausgang des TDMA-Zeitmultiplexers 10 wird zum Codierer 13 eines Codecs weitergeleitet.

Im Ausführungsbeispiel unterzieht der Codierer das Signal TRANSMIT einer NRZI(Non-Return-to-Zero-Interchange)-Codierung. Der NRZI-Code wandelt den seriellen Datenstrom in geeigneter Weise, so daß auch bei Datenpausen immer wieder Signalwechsel auftreten. Das serielle Signal TRANSMIT_OUT am Ausgang der TDMA-Schaltung 2 bzw. 7 wird dann auf einen Hochfrequenz- oder Infrarotträger aufmoduliert und drahtlos übertragen, was im einzelnen anhand der FIG. 1 bereits beschrieben wurde.

Empfangsseitig wird in der TDMA-Schaltung 2 bzw. 7 ein als moduliertes Hochfrequenz- bzw. Infrarotträgersignal ausgebildetes Eingangssignal RECEIVE_IN erhalten. Im Decodierer 14 des Codecs wird der NRZI-Code rückgewandelt. Nach dieser Decodierung gelangt das Signal RECEIVE zu einem TDMA-Demultiplexer 15, in welchem der serielle Datenstrom in die einzelnen Tastatur/Maus-Kanäle sowie die zusätzlichen Kanäle wiederaufgeteilt wird.

Über einen Paritätsgenerator 16 wird die Parität mittels des Signals PARITY geprüft. Nach einer Bearbeitung in Ausgangs-Flipflops 17 und einem Ausgangspuffer 18 werden an der Tastatur/Maussteuerung (im Falle der TDMA-Schaltung 7) bzw. an der computerseitigen Steuerung der Tastatur/Maus (im Falle der TDMA-Schaltung 2) die Signale KB_DAT, KB_CLK, M_DAT und M_CLK zur Verfügung gestellt. Am Ausgangspuffer 18 kann das zur freien Verfügung stehende zusätzliche Signal AUX_OUT abgenommen werden. Die zusätzlichen Signale ID und COMMAND werden nach den Ausgangs-Flipflops 17 einer Steuerlogik 19 eingegeben, welche zur Steuerung der gesamten TDMA-Schaltung 2 bzw. 7 dient. Das Signal ID dient dabei der Adressierung, damit nur einander zugehörige Personal-Computer und Tastaturen/Mäuse miteinander in Verbindung treten und kommunizieren können.

Es ist also festzustellen, daß eine bidirektionale Übertragungsstrecke zwei identisch aufgebaute und wirkende TDMA-Schaltungen 2 bzw. 7 enthält, die als anwendungsspezifische integrierte Schaltungschips realisiert werden können.

In der FIG. 3 ist schematisch das Prinzip des TDMA-Verfahrens dargestellt. In einem einfachen Beispiel werden einem gesteuerten Zeitmultiplex-Schalter 20 in drei Kanälen drei Eingangssignale IN 1, IN 2 und IN 3 zugeführt. Mit dem Schalter 20 werden die drei zeitdiskret quantisierten Eingangssignale IN 1, IN 2 und IN 3 nacheinander jeweils in gleicher Weise abgetastet, was ein Multiplex-Ausgangssignal OUT ergibt, das aus einem seriellen Datenstrom besteht, der nacheinander und sich wiederholend unter zeitbezogener Kanalzuordnung die Eingangssignale IN 1, IN 2 und IN 3 enthält.

In entsprechender Weise arbeitet der Zeitmultiplexer 10 in der in FIG. 2 dargestellten TDMA-Schaltung 2 bzw. 7. Beim Demultiplexen wird dieser Vorgang wieder rückgängig gemacht. Im Beispiel wird also ein ankommendes Zeitmultiplex-Signal mit einem entsprechenden Schalter wieder in seine drei Kanalanteile aufgeteilt. Entsprechend wird in der in FIG. 2 dargestellten TDMA-Schaltung 2 bzw. 7 mit dem Demultiplexer wieder die Kanalaufteilung vorgenommen.

## Patentansprüche

1. Verfahren zur drahtlosen Signalübertragung zwischen einem Personal-Computer auf der einen Seite einer Übertragungsstrecke und einer Tastatur oder einer Maus auf der anderen Seite der Übertragungsstrecke, **dadurch gekennzeichnet,** daß in vier bidirektionalen Signalkanälen, nämlich einem Tastatur-Datensignalkanal (KB_DAT), einem Tastatur-Taktsignalkanal (KB_CLK), einem Maus-Datensignalkanal (M_DAT) sowie einem Maus-Taktsignalkanal (M_CLK), einer PS/2-Schnittstelle oder einer ähnlichen Schnittstelle auf jeder der beiden Seiten der Übertragungsstrecke die jeweils in Senderichtung laufenden Signale nach dem TDMA(Time Division Multiple Access = Zeitmultiplex)-Verfahren serialisiert werden und der serielle Datenstrom einem Hochfrequenz- oder Infrarotträger aufmoduliert und dann von einem Hochfrequenz- bzw. Infrarotsender funkmäßig ausgestrahlt wird, und daß der auf jeder der beiden Seiten der Übertragungsstrecke mittels eines Hochfrequenz- bzw. Infrarotempfängers empfangene Datenstrom demoduliert und entsprechend dem eingesetzten TDMA-Verfahren demultiplexiert und damit entserialisiert wird und in Signale für die entsprechenden Kanäle der Tastatur und der Maus aufgeteilt wird.

2. Verfahren nach Anspruch 1, **dadurch gekennzeichnet,** daß noch ein oder mehrere zusätzliche Signale zwischen den beiden Seiten der Übertragungsstrecke übertragen und dazu kanalmäßig auf der Sendeseite mittels des TDMA-Verfahrens in den zu übertragenden seriellen Datenstrom eingefügt werden und daß auch die zusätzlichen Signale auf der Empfangsseite aus dem empfangenen Datenstrom durch die entsprechende TDMA-Demultiplexierung wieder einzeln kanalmäßig aufgeteilt werden.

3. Verfahren nach Anspruch 2, **dadurch gekennzeichnet,** daß als zusätzliche Signale ein Adressierungssignal (ID), ein Signal (COMMAND) zum Austausch von Status und Kommandos, ein Paritätssignal (PARITY) zur Übertragungssicherung und ein frei verfügbares Signal (AUX_IN, AUX_OUT) in Betracht kommen.

4. Verfahren nach einem der vorhergehenden Ansprüche, **dadurch gekennzeichnet,** daß der für die Aussendung vorgesehene serielle Datenstrom auf der Sendeseite vor der Aufmodulation auf den Träger noch in geeigneter Weise codiert wird und daß der empfangene Datenstrom auf der Empfangsseite nach seiner Demodulation entsprechend decodiert wird.

5. Verfahren nach Anspruch 4, **dadurch gekennzeichnet,** daß als Code ein NRZI(Non-Return-to-Zero-Interchange = Wechselschrift-Austausch)-Code verwendet wird.

6. System zur Durchführung des Verfahrens nach Anspruch 1, **dadurch gekennzeichnet,** daß sowohl im Personal-Computer als auch auf seiten der Tastatur und Maus jeweils eine TDMA-Schaltung (2, 7) mit einem TDMA-Zeitmultiplexer (10), dem in vier bidirektionalen Signalkanälen, nämlich einem Tastatur-Datensignalkanal (KB_DAT), einem Tastatur-Taktsignalkanal (KB_CLK), einem Maus-Datensignalkanal (M_DAT) und einem Maus-Taktsignalkanal (M_CLK), einer PS/2-Schnittstelle oder einer ähnlichen Schnittstelle die jeweils in Senderichtung laufenden Signale zugeführt werden und ein serielles Zeitmultiplex-Datenstromsignal (TRANSMIT_OUT) zur Weiterleitung an einen Modulator (2a, 3a) entnommen wird, und einem TDMA-Demultiplexer (15) vorgesehen ist, dem ein von einem Demodulator (2b, 3b) kommendes, empfangenes Signal (RECEIVE_IN) zur Aufteilung auf die entsprechenden Tastatur- und Mauskanäle zugeleitet wird.

7. System nach Anspruch 6 zur Durchführung des Verfahrens nach Anspruch 2 oder 3, **dadurch gekennzeichnet,** daß dem TDMA-Zeitmultiplexer (10) eingangsseitig noch ein oder mehrere zusätzliche Signale (ID, COMMAND, AUX_IN, PARITY) zugeführt werden, die in dem zum Modulator (2a, 3a) weitergeleiteten Zeitmultiplex-Datenstromsignal (TRANSMIT_OUT) dann ebenfalls enthalten sind, und daß die vom TDMA-Demultiplexer (15) nach dem Demultiplexen des empfangenen seriellen Zeitmultiplex-Signals (RECEIVE_IN) ausgangsseitig entnommenen Signale entsprechend auf alle Signalkanäle einschließlich der zusätzlichen Signalkanäle aufgeteilt werden.

8. System nach Anspruch 6 oder 7 zur Durchführung des Verfahrens nach Anspruch 4 oder 5, **dadurch gekennzeichnet,** daß in der sowohl im Personal-Computer als auch auf seiten der Tastatur und Maus jeweils vorgesehenen TDMA-Schaltung (2, 7) zwischen dem TDMA-Zeitmultiplexer (10) und dem Modulator (2a, 3a) ein Codierer (13) und zwischen dem Demodulator (2b, 3b) und dem TDMA-Demultiplexer (15) ein Decodierer (14) angeordnet ist.

9. System nach Anspruch 8, **dadurch gekennzeichnet,** daß der Codierer (13) und der Decodierer (14) jeweils durch einen zusammengefaßten Codec gebildet werden.

10. Einrichtung zur Verwendung in einem System nach einem der Ansprüche 6 bis 9, **dadurch gekennzeichnet,** daß sowohl auf seiten des Personal-Computers als auch auf seiten der Tastatur/Maus jeweils eine anwendungsspezifische integrierte TDMA-Schaltung (2, 7) vorgesehen ist, welche den TDMA-Zeitmultiplexer (10) und TDMA-Demultiplexer (15) sowie eventuell andere systemspezifische Komponenten wie unter anderem eine Steuerlogik (19), Paritätsgeneratoren (11, 16) und einen Codierer/Decodierer (13, 14) enthält.

11. Einrichtung nach Anspruch 10, **dadurch gekennzeichnet,** daß die beiden anwendungsspezifischen integrierten TDMA-Schaltungen (2, 7) identisch aufgebaute Chips sind.
